(19) **Europäisches Patentamt / European Patent Office / Office européen des brevets**

(11) **EP 4 205 885 A1**

(12) # EUROPEAN PATENT APPLICATION
published in accordance with Art. 153(4) EPC

(43) Date of publication:
**05.07.2023 Bulletin 2023/27**

(21) Application number: **21861554.0**

(22) Date of filing: **24.08.2021**

(51) International Patent Classification (IPC):
**B22F 5/00** (2006.01)     **C01B 33/06** (2006.01)
**C22C 16/00** (2006.01)     **C22C 30/00** (2006.01)
**C22C 19/03** (2006.01)     **H01M 4/38** (2006.01)

(52) Cooperative Patent Classification (CPC):
**B22F 5/00; C01B 33/06; C22C 16/00; C22C 19/03; C22C 30/00; H01M 4/38;** Y02E 60/10

(86) International application number:
**PCT/JP2021/030982**

(87) International publication number:
**WO 2022/045129 (03.03.2022 Gazette 2022/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.08.2020   JP 2020146288**
**28.09.2020   JP 2020162565**

(71) Applicant: **Panasonic Intellectual Property Management Co., Ltd.**
**Osaka-shi, Osaka 540-6207 (JP)**

(72) Inventors:
• **ASANO, Kazuko**
  **Osaka-shi, Osaka 540-6207 (JP)**
• **OKI, Yukihiro**
  **Osaka-shi, Osaka 540-6207 (JP)**
• **TAKEDA, Nanami**
  **Osaka-shi, Osaka 540-6207 (JP)**
• **HIBINO, Mitsuhiro**
  **Osaka-shi, Osaka 540-6207 (JP)**

(74) Representative: **Novagraaf International SA**
**Chemin de l'Echo 3**
**1213 Onex, Geneva (CH)**

(54) **NEGATIVE ELECTRODE ACTIVE MATERIAL FOR SECONDARY BATTERIES, AND SECONDARY BATTERY**

(57)     A negative electrode active material for a secondary battery includes an intermetallic compound having a cage structure. The cage structure is constituted of at least one first atom located within a cage, and a plurality of second atoms arranged in a cage-like form so as to surround the first atom. The first atom is a zirconium atom, and the plurality of the second atoms include 8 or more and 16 or less silicon atoms.

FIG. 1

● : Si
○ : Ni
⊗ : Zr
◖ : Si (10% of which is Ni)

Numbers in figure:
Numbering of Si atoms around Zr

EP 4 205 885 A1

**Description**

[Technical Field]

The present disclosure mainly relates to a negative electrode active material for a secondary battery.

[Background Art]

Non-aqueous electrolyte secondary batteries, especially lithium ion secondary batteries, because of their high voltage and high energy density, have been expected as promising power sources for small consumer applications, power storage devices, and electric cars. With increasing demand for a higher battery energy density, an alloy-type material containing silicon (Si) that forms an alloy with lithium has been expected to be utilized as a negative electrode active material having a high theoretical capacity density (e.g., Patent Literature 1). It is known, however, that the alloy-type material undergoes great changes in volume associated with charge and discharge.

On the other hand, an intermetallic compound having a cage structure and containing Sn as a major component undergoes small changes in volume associated with insertion and desorption of lithium ions, and is therefore attractive as a negative electrode active material. For example, Patent Literature 2 proposes an electrode material for a non-aqueous electrolyte battery including an alloy which includes, as a main phase, an intermetallic compound phase containing an R element, Sn, an M element and a Z element, as essential components, and has a composition represented by a general formula: $R_aSn_bM_cT_dX_eA_fZ_g$. Here, R is at least one element selected from rare earth elements; M is at least one element selected from the group consisting of Co, Ni, Fe, Cu, Mn, V, and Cr; T is at least one element selected from the group consisting of Ti, Zr, Hf, Nb, Ta, Mo, and W; X is at least one element selected from the group consisting of Si, Al, Sb, and In; A is at least one element selected from the group consisting of Mg, Ca, Sr, and Ba; Z is at least one element selected from the group consisting of C, N, B, and P; and a, b, c, d, e, f, and g satisfy $a+b+c+d+e+f+g = 100$ atom%, and $5 \leq a \leq 35$, $38 \leq b \leq 55$, $8 \leq c \leq 30$, $0 \leq d \leq 10$, $0 \leq e \leq 20$, $0 \leq f \leq 20$, and $0 < g \leq 30$, respectively.

[Citation List]

[Patent Literature]

Patent Literature 1: International Publication WO2016/35290
Patent Literature 2: Japanese Laid-Open Patent Publication No. 2011-146388

[Summary of Invention]

The intermetallic compound disclosed in Patent Literature 2 includes Sn element as a major component, leading to an increased weight of the secondary battery, and is not suited to mobile applications. For example, in the application for electric cars, in order to increase the cruising range, a lighter element is required to be utilized. Moreover, since Sn is a rare element, the manufacturing cost of the battery might increase when a material containing Sn is used as a major component.

In view of the above, one aspect of the present disclosure relates to a negative electrode active material for a secondary battery, including an intermetallic compound having a cage structure, wherein the cage structure is constituted of at least one first atom located within a cage, and a plurality of second atoms arranged in a cage-like form so as to surround the first atom, the first atom is a zirconium atom, and the plurality of the second atoms include 8 or more and 16 or less silicon atoms.

Another aspect of the present disclosure relates to a secondary battery, including: a positive electrode; a negative electrode; and an electrolyte, wherein the negative electrode includes the above-mentioned negative electrode active material for a secondary battery.

The present disclosure proposes utilizing an intermetallic compound which is lightweight and inexpensive and is capable of insertion and desorption of lithium ions, as a negative electrode active material for a secondary battery.

[Brief Description of Drawings]

[FIG. 1] A diagram showing a crystal structure of a negative electrode active material ($ZrNi_{1.4}Si_{3.6}$) according to one embodiment of the present disclosure.

[FIG. 2] A graph showing X-ray diffraction patterns of intermetallic compounds.

[FIG. 3] A graph showing charge-discharge curves of cells of Examples and Comparative Examples.

[FIG. 4] A diagram showing a crystal structure of a negative electrode active material ($La_3Ni_2Sn_7$) of Comparative Example.

[FIG. 5] A diagram showing a crystal structure of a negative electrode active material ($Ti_4Ni_4Si_7$) of Comparative Example.

[FIG. 6] A diagram showing a crystal structure of a negative electrode active material ($LaMn_2Si_2$) of Comparative Example.

[FIG. 7] A graph showing other X-ray diffraction patterns of intermetallic compounds.

[FIG. 8] A graph showing other charge-discharge curves of the cells of Examples.

[FIG. 9] A graph showing the relationship between the capacity retention rate and the number of charge-discharge cycles of the cells of Examples.

[Description of Embodiments]

[Negative electrode active material for secondary battery]

A negative electrode active material for a secondary battery according to an embodiment of the present disclosure includes an intermetallic compound having a cage structure. Here, the cage structure refers to a cage-type (basket-type) structure formed of predetermined atoms in the crystal structure. Specifically, the cage structure is constituted of at least one first atom located within a cage, and a plurality of second atoms arranged in a cage-like form so as to surround the first atom. The first atom can be, for example, one central atom located at the center of the cage. The second atoms are arranged so as to surround the first atom or the central atom, forming the cage. Hereinafter, the second atoms are sometimes referred to as cage atoms. The cage structure is, typically, when assuming a polyhedron with its vertices being the cage atoms, a structure having one central atom within a space defined by the polyhedron.

In order for the insertion and desorption of lithium ions to proceed stably, the crystal structure should have a cage structure. Also, the magnitude of the capacity developed through insertion and desorption of lithium ions greatly depends on the kinds of the first and second atoms. When the first atom is a zirconium atom, and the plurality of the second atoms include 8 or more and 16 or less silicon atoms, the intermetallic compound having a cage structure has a high capacity density (mAh/g). Although the details of the correlation between the capacity density and the kinds of atoms are unclear, it is considered desirable to select, as the first atom, a metal atom whose electronegativity is relatively low, and as the second atoms, a metal atom whose electronegativity is relatively high.

In the intermetallic compound having a cage structure, not all the atoms should be forming a cage structure. Part of the atoms constituting the intermetallic compound may be located at the site other than the cage structure, and may form another structure. Furthermore, not all the cage structures included in the intermetallic compound should have a zirconium atom as the first atom and 8 or more and 16 or less silicon atoms as the second atoms. However, desirably, a half or more of the cage structures included in the intermetallic compound each have a zirconium atom as the first atom and 8 or more and 16 or less silicon atoms as the second atoms. Various modifications are possible in the crystal structure of the intermetallic compound and the kinds of elements, as long as the intermetallic compound can develop a high practical capacity (e.g., 80 mAh/g or more).

The intermetallic compound may include a subphase or impurity phase (e.g., $ZrSi_2$, $NiSi_2$). The content of the subphase or impurity phase is desirably within a range in which the intermetallic compound can develop a high practical capacity (e.g., 80 mAh/g or more), but is not limited thereto.

Hereinafter, an intermetallic compound having a cage structure constituted of at least one first atom located within a cage and a plurality of second atoms arranged in a cage-like form so as to surround the first atom, in which the first atom is a zirconium atom, and the plurality of the second atoms include 8 or more and 16 or less silicon atoms is sometimes referred to as an "intermetallic compound ZS."

A silicon atom (Si) has an atomic weight of 28.09 and is lighter in weight and less expensive than Sn (atomic weight: 118.71). Furthermore, the intermetallic compound ZS has a capacity density of, for example, 100 mAh/g or more (further 140 mAh/g or more). Therefore, the intermetallic compound ZS is extremely attractive as a negative electrode active material for a secondary battery used for mobile applications (e.g., electric car application).

The plurality of the second atoms preferably include one or more nickel atoms. When part of the plurality of the second atoms is a nickel atom, the capacity density of the intermetallic compound ZS is further increased. At this time, the total number of the silicon atoms and the nickel atoms included in one cage structure may be 16 or more and 18 or less, and may be 17. In the plurality of the second atoms (cage atoms), the atomic ratio of the silicon atoms to the nickel atoms (Si/Ni ratio) may be, for example, 2 to 4, and may be, for example, 2 to 3.

The intermetallic compound ZS may have a phase of a composition represented by a general formula: $Zr_xNi_ySi_z$.

The general formula satisfies x = 1, $0 \leq y \leq 3$, and $1 \leq z \leq 9$. Although at least part of the Zr is the first atom, the intermetallic compound ZS can contain Zr that is not located within the cage (is not a central atom). Likewise, at least part of the Ni and the Si is the second atom, but the intermetallic compound ZS may contain Ni or Si that does not constitute the cage. Therefore, the ratio of (y+z) to x can be different from the ratio of the number of the second atoms to the number of the first atoms in the cage structure (e.g., 16 to 18). The ratio of (y+z) to x: (y+z) / x, may be, for example, 1.5 to 5, or 2 to 5, and may be, for example, 2 or 5.

When the plurality of the second atoms includes a nickel atom, the number of the nickel atoms included in the second atoms may be, for example, 4 or more and 6 or less. At this time, all the rest of the second atoms may be a silicon atom or an atom of another element. Even when the intermetallic compound ZS contains an atom of an element other than Zr, Si and Ni, the intermetallic compound ZS desirably has at least a phase having a composition represented by the general formula: $Zr_xNi_ySi_z$.

The number of the silicon atoms included in the second atoms is more preferably 11 or more and 13 or less. Such an intermetallic compound ZS can form a stable cage structure, which can also enhance the overall stability of the crystal structure. Therefore, when the intermetallic compound ZS is used as a negative electrode active material for a secondary battery, the deterioration in charge-discharge cycles becomes less likely to occur.

A specific example of the intermetallic compound ZS is, for example, at least one phase selected from the group consisting of $ZrNi_{1.4}Si_{3.6}$ and $ZrSi_2$. In particular, $ZrNi_{1.4}Si_{3.6}$ can develop a capacity density of 200 mAh/g or more. $ZrNi_{1.4}Si_{3.6}$ can also be expressed as $ZrNi(Ni_{0.4}Si_{3.6})$.

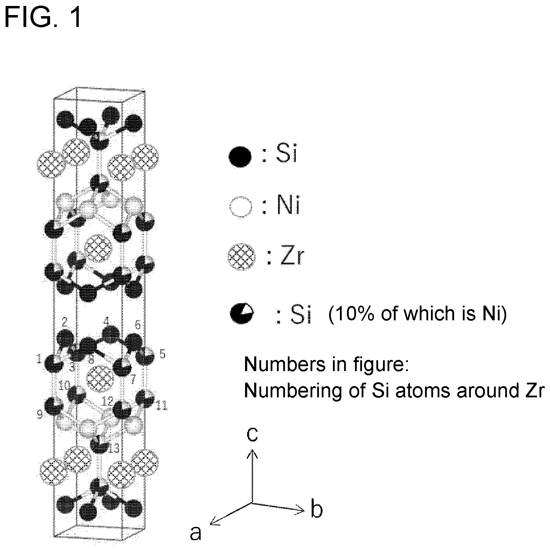

FIG. 1 schematically shows a crystal structure of $ZrNi_{1.4}Si_{3.6}$. In FIG. 1, the unit lattice has a symmetry belonging to the *I4/mmm* space group. Two cage structures are included in the unit lattice near its central part. At the center of the cage, Zr is located as the central atom. Si and Ni are arranged in a cage-like form so as to surround Zr. In the illustrated example, the number of the cage atoms (here, the total number of Si and Ni) is 17, with the Si sites being 4, the Ni sites being 4, and the sites occupied by Si or Ni (Si/Ni sites) being 9, but is not limited thereto. The illustrated example shows the case where 10% of the Si/Ni sites have become Ni sites, and the rest has become Si sites, but this is not a limitation. Various modifications can take place within a range in which the intermetallic compound can develop a high practical capacity (e.g., 80 mAh/g or more) or within a crystallographically acceptable range.

The presence of the intermetallic compound ZS can be confirmed by X-ray diffractometry using CuKα rays. For example, the X-ray diffraction pattern of an intermetallic compound ZS having a crystal structure of $ZrNi_{1.4}Si_{3.6}$ or a crystal structure similar thereto has diffraction peaks (1) at or around 2θ = 35.8°, (2) at or around 2θ = 36.8°, (3) at or around 2θ = 40.8°, and (4) at or around 2θ = 47.9°.

The intermetallic compound ZS belongs to a tetragonal or orthorhombic crystal system. For example, when the intermetallic compound ZS having a crystal structure of $ZrNi_{1.4}Si_{3.6}$ or a crystal structure similar thereto belongs to a tetragonal crystal system, the lattice constants a and c determined by X-ray diffractometry satisfy $3.0 \text{ Å} \leq a \leq 4.5 \text{ Å}$, and $21 \text{ Å} \leq c \leq 25 \text{ Å}$. When such an intermetallic compound ZS belongs to an orthorhombic crystal system, the lattice constants a, b, and c determined by X-ray diffractometry satisfy $3.0 \text{ Å} \leq a \leq 4.5 \text{ Å}$, $3.0 \text{ Å} \leq b \leq 4.5 \text{ Å}$, and $21 \text{ Å} \leq c \leq 25 \text{ Å}$.

The lattice constants a and b, in a more stable crystal structure, preferably satisfy $3.6 \text{ Å} \leq a$, and $b \leq 4.2 \text{ Å}$, and further satisfy $3.7 \text{ Å} \leq a$, and $b \leq 3.9 \text{ Å}$. The lattice constant c, in a more stable crystal structure, preferably satisfies $22 \text{ Å} \leq c \leq 24 \text{ Å}$, and further satisfies $23.0 \text{ Å} \leq c \leq 24.0 \text{ Å}$.

For example, in an X-ray diffraction pattern of a typical intermetallic compound ZS having a crystal structure of $ZrNi_{1.4}Si_{3.6}$ or a crystal structure similar thereto, the d value of a diffraction peak given by the *hkl* index of 114 is 2.38 Å or more and 2.5 Å or less, and is 2.42 Å or more and 2.47 Å or less.

The intermetallic compound ZS may contain an atom Me different from any of Zr, Ni and Si. The atom Me may be incorporated into the crystal structure of a phase included in the intermetallic compound ZS. In other words, the intermetallic compound ZS may be a solid solution containing an Me element.

The atom Me is not limited, but Fe, Hf, Cr, Co, Al, C, P, Ti, and the like can be mentioned as examples of the atom Me. In particular, when an Fe-containing intermetallic compound ZS is used as a negative electrode active material for a secondary battery, the deterioration in charge-discharge cycles becomes less likely to occur. In other words, Fe has a function to improve the capacity retention rate of the secondary battery. Although the reason why the capacity retention rate is improved by Fe is unclear, it is considered that with the Fe-containing intermetallic compound ZS, the strength can be more improved than with the intermetallic compound ZS not containing Fe. The changes in strength are presumed to have relevance to the changes in capacity retention rate.

Desirably, Fe is well dispersed in the intermetallic compound ZS such that the presence thereof cannot be confirmed by X-ray diffractometry of the intermetallic compound ZS. In other words, the intermetallic compound ZS may be a solid solution containing Fe.

The content of the Me element (such as Fe) contained in the intermetallic compound ZS can be measured by, for example, inductively coupled plasma atomic emission spectrometry (ICP). For example, a sample of the intermetallic compound ZS is completely dissolved in a heated acid solution (e.g., a mixed acid of hydrofluoric acid, nitric acid and sulfuric acid), and the solution residue is removed by filtration, and then analyzed by ICP, to measure the spectral intensity of each element. Subsequently, using a commercially available standard solution of the element, a calibration curve is drawn, from which the content of each element contained in the intermetallic compound ZS is calculated.

The Fe content in the intermetallic compound may be, for example, 2 mass% or less, may be 1.5 mass% or less, may be 1.2 mass% or less, may be 1 mass% or less, may be 0.5 mass% or less, and may be 0.3 mass% or less When the intermetallic compound contains Fe, the lower limit of the Fe content until which the effect of Fe can be obtained is, for example, 0.001 mass% or more, and is 0.01 mass% or more. These upper and lower limits may be combined in any combination when setting the range of the content. For example, the Fe content in the intermetallic compound may be 0.001 mass% or more and 1.2 mass% or less, and may be 0.01 mass% or more and 0.5 mass% or less.

[Method for producing intermetallic compound ZS]

The intermetallic compound ZS can be produced by weighing raw materials, melting the raw materials to form a molten metal, and then, cooling the molten metal.

For the raw materials, although not limited thereto, a simple substance material (e.g., metal lump, metal powder) of each constituent element of the intermetallic compound ZS can be used. Melting of the raw materials is preferably performed using an arc melting furnace in an inert gas atmosphere, such as argon. When the molten metal is cooled, a metal lump containing constituent elements in a desired composition is obtained.

In the metal lump obtained by cooling the molten metal, the crystallization of the intermetallic compound has, in some cases, failed to proceed sufficiently. Therefore, it is desirable to anneal the metal lump by heating it in a reduced pressure of $2.0 \cdot 10^{-3}$ Pa or less or in a vacuum atmosphere. The heating temperature during annealing is not limited, but may be set at 600 °C or higher and 900 °C or lower. The heating time during annealing is not limited, but may be 10 hours or more and 120 hours or less.

[Secondary battery]

A secondary battery according to an embodiment of the present disclosure includes a positive electrode, a negative electrode, and a non-aqueous electrolyte, and the negative electrode includes the above-described negative electrode active material (intermetallic compound ZS). In the following, the secondary battery will be described in detail, with a lithium ion secondary battery taken as an example.

[Negative electrode]

The negative electrode may include a negative electrode current collector, and a negative electrode mixture layer supported on a surface of negative electrode current collector. The negative electrode mixture layer can be formed by applying a negative electrode slurry of a negative electrode mixture dispersed in a dispersion medium, onto a surface of the negative electrode current collector, followed by drying. The applied film after drying may be rolled as needed.

The negative electrode mixture contains a negative electrode active material (intermetallic compound ZS) as an essential component, and can contain a binder, conductive agent, thickener, and the like, as optional components.

The negative electrode active material may further contain, in addition to the intermetallic compound ZS, a material that electrochemically absorbs and releases lithium ions. Such a material can include, but is not limited to, a carbon material. Examples of the carbon material include graphite, graphitizable carbon (soft carbon), and non-graphitizable carbon (hard carbon).

Examples of the negative electrode current collector include a non-porous conductive substrate (e.g., metal foil) and a porous conductive substrate (e.g., mesh, net, punched sheet). The negative electrode current collector may be made of, for example, stainless steel, nickel, a nickel alloy, copper, or a copper alloy.

The binder may be a resin material, examples of which include: fluorocarbon resin, such as polytetrafluoroethylene and polyvinylidene fluoride (PVDF); polyolefin resin, such as polyethylene and polypropylene; polyamide resin, such as aramid resin; polyimide resin, such as polyimide and polyamide-imide; acrylic resin, such as polyacrylic acid, methyl polyacrylate, and ethylene-acrylic acid copolymer; vinyl resin, such as polyacrylonitrile and polyvinyl acetate; polyvinyl pyrrolidone; polyether sulfone; and a rubbery material, such as styrene-butadiene copolymer rubber (SBR). The binder may be used singly or in combination of two or more kinds.

Examples of the conductive agent include: carbons, such as acetylene black; conductive fibers, such as carbon fibers and metal fibers; fluorinated carbon; metal powders, such as aluminum; conductive whiskers, such as zinc oxide and potassium titanate; conductive metal oxides, such as titanium oxide; and organic conductive materials, such as phenylene derivatives. The conductive agent may be used singly or in combination of two or more kinds.

Examples of the thickener include: cellulose derivatives (e.g., cellulose ethers), such as carboxymethyl cellulose (CMC) and modified products thereof (including salts such as Na salts), and methyl cellulose; saponificated products of polymers having vinyl acetate units, such as polyvinyl alcohol; and polyethers (e.g., polyalkylene oxide, such as polyethylene oxide). The thickener may be used singly or in combination of two or more kinds.

[Positive electrode]

The positive electrode may include a positive electrode current collector, and a positive electrode mixture layer supported on a surface of the positive electrode current collector. The positive electrode mixture layer can be formed by applying a positive electrode slurry of a positive electrode mixture dispersed in a dispersion medium, onto a surface of the positive electrode current collector, and drying the slurry. The dry applied film may be rolled as needed.

The positive electrode mixture can contain a positive electrode active material as an essential component, and can contain a binder, a conductive agent, and the like as optional components.

As the positive electrode active material, for example, a lithium-containing composite oxide can be used. Examples thereof include $Li_aCoO_2$, $Li_aNiO_2$, $Li_aMnO_2$, $Li_aCo_bNi_{1-b}O_2$, $Li_aCo_bMe_{1-b}O_c$, $Li_aNi_{1-b}Me_bO_c$, $Li_aMn_2O_4$, $Li_aMn_{2-b}Me_bO_4$, $LiMePO_4$, $Li_2MePO_4F$, where Me is at least one selected from the group consisting of Na, Mg, Sc, Y, Mn, Fe, Co, Ni, Cu, Zn, Al, Cr, Pb, Sb, and B. Here, a = 0 to 1.2, b = 0 to 0.9, and c = 2.0 to 2.3. The value a representing the molar ratio of lithium is subjected to increase and decrease during charging and discharging.

The binder and the conductive agent may be like those exemplified for the negative electrode. As the conductive agent, graphite, such as natural graphite and artificial graphite, may be used.

The form and the thickness of the positive electrode current collector may be respectively selected from the forms and the ranges corresponding to those of the negative electrode current collector. The positive electrode current collector may be made of, for example, stainless steel, aluminum, an aluminum alloy, or titanium.

[Electrolyte]

The electrolyte contains a solvent, and a lithium salt dissolved in the solvent. The concentration of the lithium salt in the electrolyte is preferably, for example, 0.5 mol/L or more and 2 mol/L or less. By controlling the lithium salt concentration within the above range, an electrolyte having excellent ion conductivity and moderate viscosity can be obtained. The lithium salt concentration, however, is not limited to the above.

The solvent may be aqueous or non-aqueous. Examples of the non-aqueous solvent include cyclic carbonic acid esters, chain carbonic acid esters, cyclic carboxylic acid esters, and chain carboxylic acid esters. The cyclic carbonic acid esters are exemplified by propylene carbonate (PC) and ethylene carbonate (EC). The chain carbonic acid esters are exemplified by diethyl carbonate (DEC), ethyl methyl carbonate (EMC), and dimethyl carbonate (DMC). The cyclic carboxylic acid esters are exemplified by γ-butyrolactone (GBL) and γ-valerolactone (GVL). The chain carboxylic acid esters are exemplified by methyl formate, ethyl formate, propyl formate, methyl acetate, ethyl acetate, propyl acetate, methyl propionate, ethyl propionate, and propyl propionate. The non-aqueous solvent may be used singly or in combination of two or more kinds.

Examples of the lithium salt include: $LiClO_4$, $LiBF_4$, $LiPF_6$, $LiAlCl_4$, $LiSbF_6$, $LiSCN$, $LiCFsSOs$, $LiCF_3CO_2$, $LiAsF_6$, $LiB_{10}Cl_{10}$, lithium lower aliphatic carboxylate, LiCl, LiBr, LiI, borates, and imides. Examples of the borates include lithium bis(1,2-benzenediolate(2-)-O,O') borate, lithium bis(2,3-naphthalenediolate(2-)-O,O') borate, lithium bis(2,2'-biphenyldiolate(2-)-O,O') borate, and lithium bis(5-fluoro-2-olate-1-benzenesulfonate-O,O') borate. Examples of the imides include lithium bisfluorosulfonyl imide ($LiN(FSO_2)_2$), lithium bis(trifluoromethanesulfonyl)imide ($LiN(CF_3SO_2)_2$), lithium trifluoromethanesulfonyl nonafluorobutanesulfonyl imide ($LiN(CF_3SO_2)(C_4F_9SO_2)$), and lithium bis(pentafluoroethanesulfonyl)imide ($LiN(C_2F_5SO_2)_2$). The lithium salt may be used singly or in combination of two or more kinds.

[Separator]

Usually, it is desirable to interpose a separator between the positive electrode and the negative electrode. The separator is excellent in ion permeability and has moderate mechanical strength and electrically insulating properties. The separator may be, for example, a microporous thin film, a woven fabric, or a nonwoven fabric. The separator is preferably made of a polyolefin, such as polypropylene and polyethylene.

In an exemplary structure of the secondary battery, an electrode group is housed together with the electrolyte in an outer body. The electrode group may be a wound electrode group formed by winding the positive electrode and the negative electrode, with the separator interposed therebetween, may be a stacked electrode group formed by stacking the positive electrode and the negative electrode, with the separator interposed therebetween, and may be of a different form. The secondary battery may be of any type, such as cylindrical, prismatic, coin, button, or laminate type.

The present disclosure will be specifically described below with reference to Examples and Comparative Examples. It is to be noted, however, the present invention is not limited to the following Examples.

<Example 1>

[Production of negative electrode active material]

As raw materials, simple substance materials (metal lumps) of Zr, Ni, and Si were weighed in an atomic ratio of Zr:Ni: Si = 1:1.4:3.6, and placed on a water-cooled copper hearth in an arc melting furnace. The atmosphere in the arc melting furnace was then replaced with an argon atmosphere, and the raw materials were melted and rapidly cooled by an arc melting method, to obtain a button-shaped metal lump. Note that since the surface to come in contact with the water-cooled copper hearth is always in a cooled state, the sample is cooled instantly when the arc irradiation is turned off. The resulting metal lump was turned upside down within the furnace using a turning bar, followed by melting and rapid cooling again by the arc melting method, and was further turned upside down, followed by melting and rapid cooling. The above process was repeated five times to obtain a metal lump containing constituent elements in a composition of $ZrNi_{1.4}Si_{3.6}$. Next, the obtained metal lump was enclosed in a quartz tube evacuated to a vacuum of $2.0 \cdot 10^{-3}$ Pa or less, and annealed at 800 °C for 48 hours, to allow crystallization to proceed sufficiently. The annealed metal lump was ground in a mortar to a particle size of 45 $\mu$m or less, and used as a negative electrode active material (intermetallic compound ZS).

[X-ray diffractometry]

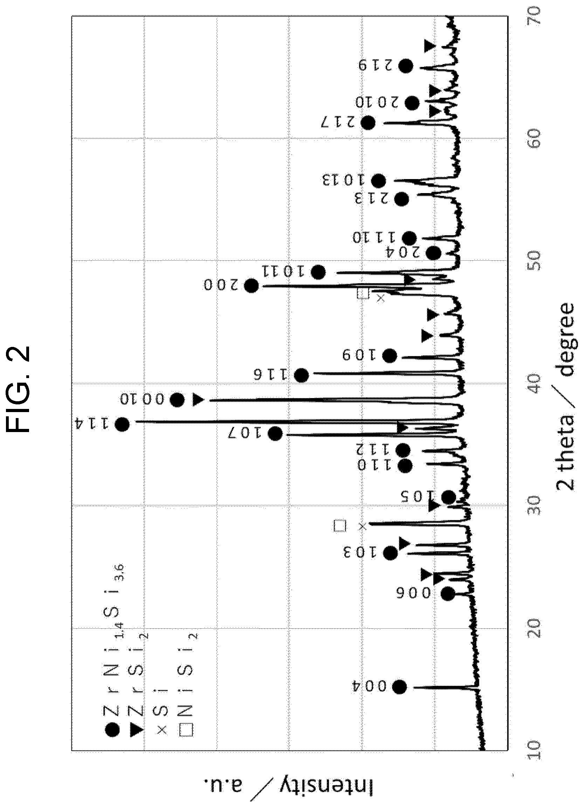

An X-ray diffraction pattern of the obtained intermetallic compound ZS is shown in FIG. 2. Diffraction peaks can be observed at $2\theta$ = 35.76°, 36.83°, 40.80°, and 47.94° in the X-ray diffraction pattern.
Further analysis of the X-ray diffraction pattern revealed that the obtained intermetallic compound ZS belonged to a tetragonal crystal system, in which lattice constant $a$ = 3.786 Å and lattice constant c = 23.368 Å. The d value of the diffraction peak given by the *hkl* index of 114 was 2.438 Å. The above results mean that the intermetallic compound ZS of the present Example has a crystal structure approximately the same as shown in FIG. 1.

[Preparation of negative electrode]

A negative electrode mixture containing the intermetallic compound ZS, carbon black, SBR, and CMC at a mass ratio of 95:0.5:1.5:3.0 was mixed with an appropriate amount of water, to prepare a negative electrode slurry. Next, the negative electrode slurry was applied onto a surface of a copper foil, so that the mass of the negative electrode mixture per 1 $m^2$ of the copper foil was 150 g. The applied film was dried, and then rolled, to produce an electrode plate with a negative electrode mixture layer having a density of 2 $g/cm^3$ formed on one side of the copper foil. The electrode plate was punched into a circle of 12.5 mm in diameter, and used as a negative electrode.

[Preparation of counter electrode]

A counter electrode was prepared by punching a 300-$\mu$m-thick metal lithium foil into a circle of 17 mm in diameter.

[Preparation of liquid electrolyte]

A liquid electrolyte was prepared by dissolving $LiPF_6$ at a concentration of 1.0 mol/L in a mixed solvent containing ethylene carbonate and ethyl methyl carbonate in a volume ratio of 1:3.

[Fabrication of coin-shaped cell]

A bottomed cell case made of stainless steel having an opening was prepared, into which the negative electrode and a separator were placed in this order. The separator used here was a 0.45-mm-thick non-woven fabric made of polyphenylene sulfide (PPS). On the other hand, a sealing plate made of stainless steel provided with a polypropylene gasket at its periphery was prepared, and a lithium foil serving as a counter electrode was attached to the inner surface of the sealing plate. After injecting the liquid electrolyte into the cell case, the opening of the cell case was closed with the sealing plate, to completer a cell A1. The cell size was set to 20 mm in diameter and 3.2 mm in thickness.

[Charge-discharge curve]

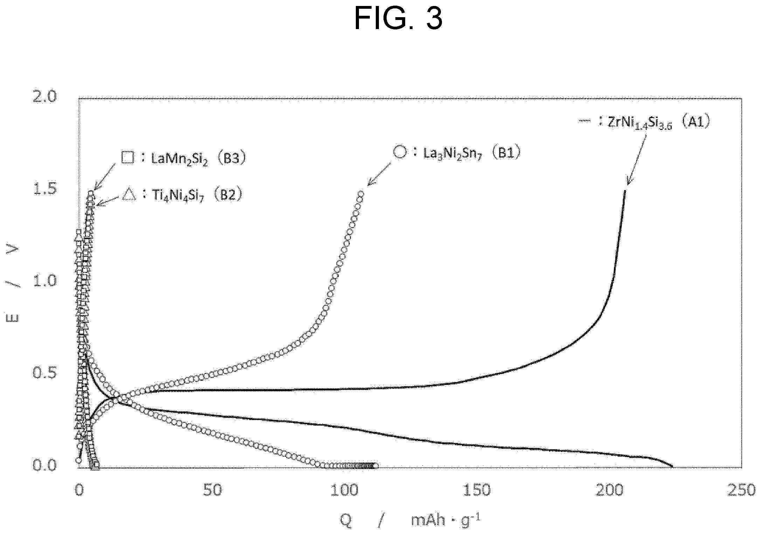

With respect to the fabricated cell A1, at 25 °C, the negative electrode was charged at 0.1 mA to 0.01 V, and subsequently, the negative electrode was discharged to 1.5 V A charge-discharge curve at this first charge-discharge cycle is shown in FIG. 3. A discharge capacity at the first cycle, and a ratio of the discharge capacity to the charge capacity (initial efficiency) are shown in Table 1. FIG. 1 and Table 1 show that the cell A1 has a capacity density of 205 mAh/g. Also, the initial efficiency was high, which was about 92 %.

[Table 1]

|  | A1 | B1 | B2 | B3 |
|---|---|---|---|---|
| Intermetallic compound | $ZrNi_{1.4}Si_{3.6}$ | $La_3Ni_2Sn_7$ | $Ti_4Ni_4Si_7$ | $LaMn_2Si_2$ |
| Space group | *I4/mmm* | *Cmmm* | *I4/mmm* | *I4/mmm* |
| Discharge capacity (mAh/g) | 205 | 105 | 5 | 10 |
| Initial efficiency (%) | 92 | 74 | 72 | 30 |

<Comparative Example 1>

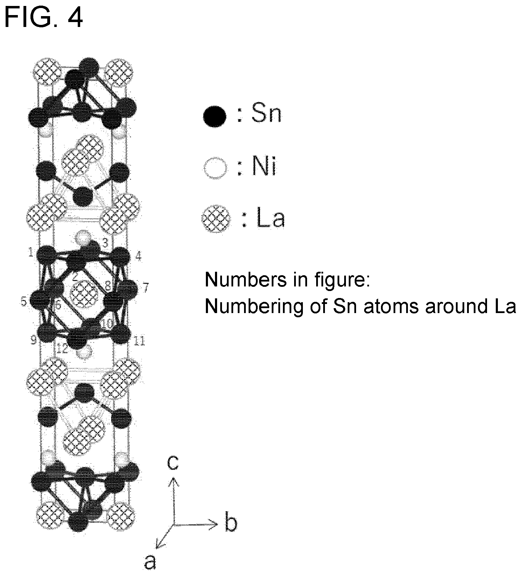

A cell B1 was fabricated and evaluated in the same manner as in Example 1, except that an intermetallic compound ($La_3Ni_2Sn_7$) having a crystal structure as shown in FIG. 4 was used as the negative electrode active material. The charge-discharge curve at the first cycle is shown in FIG. 3. The discharge capacity at the first cycle, and the initial efficiency are shown in Table 1.

$La_3Ni_2Sn_7$ has a symmetry belonging to the *Cmmm* space group. One cage structure is included at the center of the unit lattice; however, the central atom is La, and 12 Sn atoms are arranged in a cage-like form so as to surround La. Since $La_3Ni_2Sn_7$ contains Sn as a major component, the capacity density is small, and the cell A1 of Example 1 is more excellent than the cell B1 in terms of the capacity density and the initial efficiency.

<Comparative Example 2>

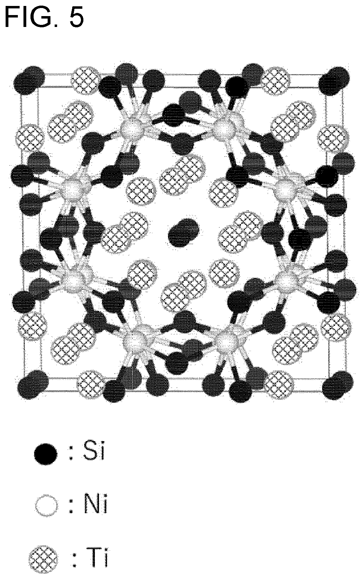

A cell B2 was fabricated and evaluated in the same manner as in Example 1, except that an intermetallic compound ($Ti_4Ni_4Si_7$) having a crystal structure as shown in FIG. 5 was used as the negative electrode active material. The charge-discharge curve at the first cycle is shown in FIG. 3. The discharge capacity at the first cycle, and the initial efficiency are shown in Table 1.

$Ti_4Ni_4Si_7$ is an intermetallic compound containing Ti in place of Zr, and has a crystal structure significantly different from that of $ZrNi_{1.4}Si_{3.6}$. Also, $Ti_4Ni_4Si_7$ has almost no electrochemical activity. This indicates that a capacity density as high as that of $ZrNi_{1.4}Si_{3.6}$ cannot be obtained simply because the kinds of elements are in common.

<Comparative Example 3>

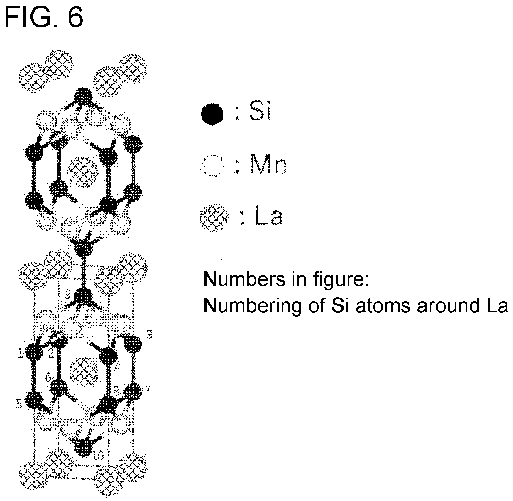

A cell B3 was fabricated and evaluated in the same manner as in Example 1, except that an intermetallic compound ($LaMn_2Si_2$) having a crystal structure as shown in FIG. 6 was used as the negative electrode active material. The charge-discharge curve at the first cycle is shown in FIG. 3. The discharge capacity at the first cycle, and the initial efficiency are shown in Table 1.

$LaMn_2Si_2$ has a cage structure, the central atom is La, and 10 Si atoms and 8 Ni atoms are arranged in a cage-like form so as to surround La. $LaMn_2Si_2$ has a symmetry similar to that of $ZrNi_{1.4}Si_{3.6}$, and is also similar thereto in the crystal structure. However, $LaMn_2Si_2$ has almost no electrochemical activity. This indicates that the capacity density greatly depends on the kinds of elements.

<Examples 2 and 3>

As raw materials, simple substance materials (metal lumps) of Zr, Ni, and Si were weighed in an atomic ratio of Zr:Ni:Si = 1:1.4:3.6, to which a predetermined amount of Fe was further added. The raw materials were placed on a water-cooled copper hearth in an ark melting furnace. Except for the above, in the same manner as in Example 1, a negative electrode active material (intermetallic compound ZS-1) of Example 2 with an Fe content of 0.12 mass%, and a negative electrode active material (intermetallic compound ZS-2) of Example 3 with an Fe content of 1.12 mass% were obtained.

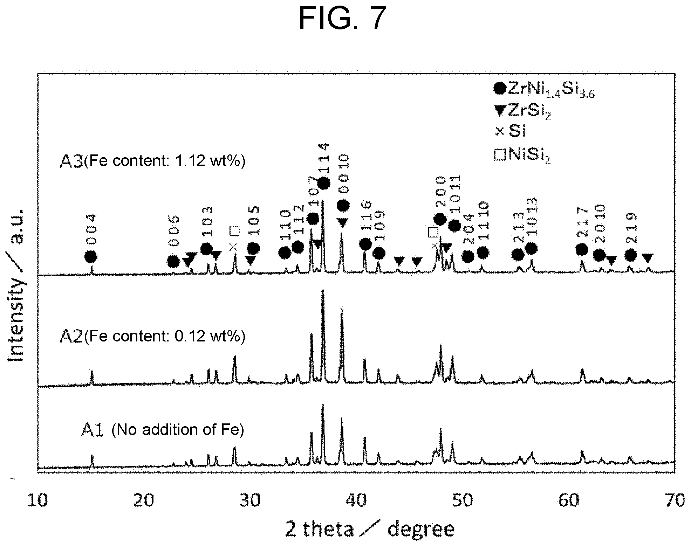

X-ray diffraction patterns of the intermetallic compounds ZS-1 and ZS-2 are shown in FIG. 7. As shown in FIG. 7, the X-ray diffraction patterns of the Fe-containing intermetallic compounds ZS are substantially the same as that of the intermetallic compound ZS of Example 1 with no addition of a predetermined amount of Fe, and no significant difference was observed. It can be said therefore that the intermetallic compounds ZS-1 and ZS-2 have a crystal structure approximately the same as shown in FIG. 1.

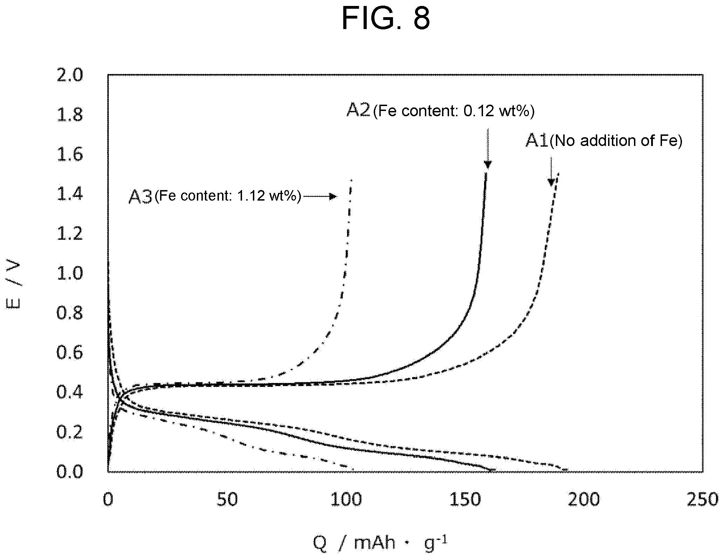

Next, a cell A2 of Example 2 and a cell A3 of Example 3 were fabricated in the same manner as in Example 1, except that the intermetallic compound ZS-1 and the intermetallic compound ZS-2 were respectively used as the negative electrode active material. With respect to the fabricated cells A2 and A3 and the cell A1 of Example 1, at 25 °C, the negative electrode was charged to 0.01 V at 0.5 mA, which was a rate higher than that in Example 1 and Comparative Examples 1 to 3, and subsequently, the negative electrode was discharged to 1.5 V The charge-discharge curves at this first charge-discharge cycle are shown in FIG. 8. The discharge capacities at the first cycle are shown in Table 2.

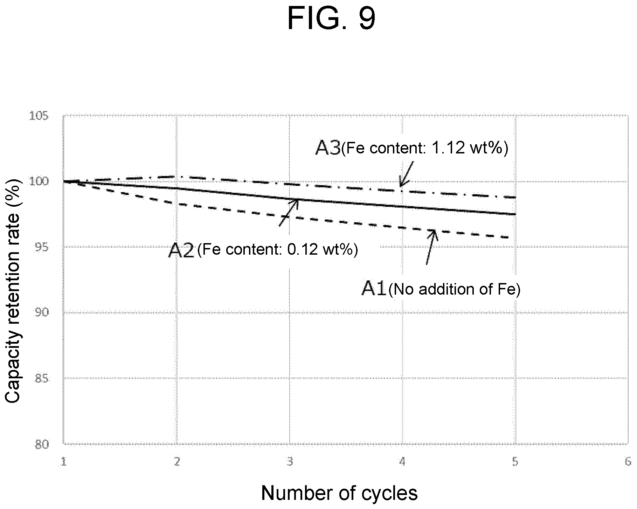

Furthermore, a charge-discharge cycle of charging the negative electrode at 0.5 mA to 0.01 V, and then discharging the negative electrode to 1.5 V was performed five times in total. A ratio of the discharge capacity at the 5th cycle to the discharge capacity at the 1st cycle is shown as a capacity retention rate in Table 2. In Table 2, the Fe content of A1 is indicated as "-", as Fe was not added when obtaining the intermetallic compound ZS. The relationship between the capacity retention rate and the number of charge-discharge cycles of each cell is shown in FIG. 9.

[Table 2]

|  | A1 | A2 | A3 |
|---|---|---|---|
| Fe content (wt%) | - | 0.12 | 1.12 |
| Discharge capacity (mAh/g) | 200 | 165 | 105 |
| Capacity retention rate (%) | 95.7 | 97.5 | 98.8 |

From FIGS. 8 and 9 and Table 2, it would be understood that although the discharge capacity has a tendency to decrease when the intermetallic compound ZS contains Fe, the capacity retention rate improves with the increase of the Fe content of the intermetallic compound ZS.

[Industrial Applicability]

The negative electrode active material for a secondary battery according to the present disclosure is useful as a negative electrode active material for a secondary battery used in mobile applications (e.g., electric cars, mobile communication devices, portable electronic devices).

**Claims**

1. A negative electrode active material for a secondary battery, comprising

    an intermetallic compound having a cage structure, wherein
    the cage structure is constituted of at least one first atom located within a cage, and a plurality of second atoms arranged in a cage-like form so as to surround the first atom,
    the first atom is a zirconium atom, and
    the plurality of the second atoms include 8 or more and 16 or less silicon atoms.

2. The negative electrode active material for a secondary battery according to claim 1, wherein the plurality of the second atoms include one or more nickel atoms.

3. The negative electrode active material for a secondary battery according to claim 2, wherein the intermetallic compound has a phase represented by a general formula: $Zr_xNi_ySi_z$ where

$$x = 1,$$

$$0 \leq y \leq 3,$$

and

$$1 \leq z \leq 9.$$

4. The negative electrode active material for a secondary battery according to claim 2 or 3, wherein the number of the nickel atoms included in the plurality of the second atoms is 4 or more and 6 or less.

5. The negative electrode active material for a secondary battery according to any one of claims 1 to 4, wherein the number of the silicon atoms included in the cage atoms is 11 or more and 13 or less.

6. The negative electrode active material for a secondary battery according to any one of claims 1 to 5, wherein the intermetallic compound includes at least one phase selected from the group consisting of $ZrNi_{1.4}Si_{3.6}$ and $ZrSi_2$.

7. The negative electrode active material for a secondary battery according to any one of claims 1 to 6, wherein an X-ray diffraction pattern of the intermetallic compound has diffraction peaks

   (1) at or around $2\theta = 35.8\ °$,
   (2) at or around $2\theta = 36.8\ °$,
   (3) at or around $2\theta = 40.8\ °$, and
   (4) at or around $2\theta = 47.9\ °$.

8. The negative electrode active material for a secondary battery according to any one of claims 1 to 7, wherein

   the intermetallic compound belongs to a tetragonal or orthorhombic crystal system, and
   when belonging to the tetragonal crystal system, lattice constants $a$ and $c$ determined by X-ray diffractometry satisfy

   $$3.0\ \text{Å} \leq a \leq 4.5\ \text{Å},$$

   and

   $$21\ \text{Å} \leq c \leq 25\ \text{Å},$$

   and
   when belonging to the orthorhombic crystal system, lattice constants $a$, $b$, and $c$ determined by X-ray diffractometry satisfy

   $$3.0\ \text{Å} \leq a \leq 4.5\ \text{Å},$$

   $$3.0\ \text{Å} \leq b \leq 4.5\ \text{Å},$$

   and

   $$21\ \text{Å} \leq c \leq 25\ \text{Å}.$$

9. The negative electrode active material for a secondary battery according to any one of claims 1 to 8, wherein in the X-ray diffraction pattern of the intermetallic compound, a $d$-value of a diffraction peak given by an $hkl$ index of 114 is 2.38 Å or more and 2.5 Å or less.

10. The negative electrode active material for a secondary battery according to any one of claims 1 to 9, wherein

    the intermetallic compound contains an atom Me different from any of Zr, Ni, and Si, and
    the atom Me includes at least Fe.

11. The negative electrode active material for a secondary battery according to claim 10, wherein an Fe content in the intermetallic compound is 2 mass% or less.

**12.** The negative electrode active material for a secondary battery according to claim 10 or 11, wherein an Fe content in the intermetallic compound is 0.001 mass% or more.

**13.** A secondary battery, comprising:

a positive electrode; a negative electrode; and an electrolyte, wherein
the negative electrode includes the negative electrode active material for a secondary battery of any one of claims 1 to 12.

# FIG. 1

● : Si

○ : Ni

▨ : Zr

◕ : Si (10% of which is Ni)

Numbers in figure:
Numbering of Si atoms around Zr

FIG. 2

# FIG. 3

FIG. 4

● : Sn

○ : Ni

▨ : La

Numbers in figure:
Numbering of Sn atoms around La

## FIG. 5

● : Si

○ : Ni

▨ : Ti

## FIG. 6

● : Si

○ : Mn

▨ : La

Numbers in figure:
Numbering of Si atoms around La

# FIG. 7

FIG. 8

EP 4 205 885 A1

## FIG. 9

EP 4 205 885 A1

## INTERNATIONAL SEARCH REPORT

| International application No. |
|---|
| **PCT/JP2021/030982** |

**A.    CLASSIFICATION OF SUBJECT MATTER**

*B22F 5/00*(2006.01)i; *C01B 33/06*(2006.01)i; *C22C 16/00*(2006.01)i; *C22C 30/00*(2006.01)i; *C22C 19/03*(2006.01)i; *H01M 4/38*(2006.01)i

FI:    H01M4/38 Z; C01B33/06; B22F5/00 K; C22C19/03 M; C22C16/00; C22C30/00

According to International Patent Classification (IPC) or to both national classification and IPC

**B.    FIELDS SEARCHED**

Minimum documentation searched (classification system followed by classification symbols)

B22F5/00; C01B33/06; C22C16/00; C22C30/00; C22C19/03; H01M4/38

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2013-253012 A (FURUKAWA ELECTRIC CO., LTD.) 19 December 2013 (2013-12-19) paragraphs [0049]-[0052], [0108], fig. 21 | 1, 5, 6, 10, 12, 13 |
| A | | 2-4, 7-9, 11 |
| X | JP 2020-126835 A (DAIDO STEEL CO., LTD.) 20 August 2020 (2020-08-20) paragraphs [0048]-[0069] | 1, 5, 6, 13 |
| A | | 2-4, 7-12 |
| X | JP 2011-100745 A (GS YUASA INTERNATIONAL LTD.) 19 May 2011 (2011-05-19) paragraphs [0103], [0106], [0107], [0132] | 1, 5, 6, 13 |
| A | | 2-4, 7-12 |
| A | FORST, Clemens J. et al. Heteroepitaxial growth of high-K gate oxides on silicon: insights from first-principles calculations on Zr on Si(001), Computational Materials Science, 2003, vol. 27, pp. 70-74 fig. 6 | 1-13 |

☐ Further documents are listed in the continuation of Box C.        ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 October 2021** | **26 October 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2021/030982**

| Patent document cited in search report | | | Publication date (day/month/year) | Patent family member(s) | Publication date (day/month/year) |
|---|---|---|---|---|---|
| JP | 2013-253012 | A | 19 December 2013 | (Family: none) | |
| JP | 2020-126835 | A | 20 August 2020 | (Family: none) | |
| JP | 2011-100745 | A | 19 May 2011 | (Family: none) | |

Form PCT/ISA/210 (patent family annex) (January 2015)

**EP 4 205 885 A1**

**Patent documents cited in the description**

- WO 201635290 A

- JP 2011146388 A